# EUROPEAN PATENT SPECIFICATION

(11) **EP 1 877 512 B1**
(45) Date of publication and mention of the grant of the patent: **12.10.2016**
(21) Application number: 06721552.5
(22) Date of filing: 06.04.2006
(51) Int. Cl.: C08L 27/06, C08K 5/103, C09K 3/10, B60R 13/08, G10K 11/162, C08L 33/12, C08L 63/02

(54) **METHOD FOR IMPROVING ACOUSTIC PROPERTIES**
VERFAHREN ZUR VERBESSERUNG DER AKUSTISCHEN EIGENSCHAFTEN
PROCEDE D'AMELIORATION DE PROPRIETES ACOUSTIQUES

(30) Priority: 08.04.2005 WO PCT/BE2005/000053
(43) Date of publication of application: 16.01.2008
(73) Proprietor: Ferro (Belgium) SPRL, 1050 Brussels (BE)
(72) Inventor: BILLAST, Karl M.D.B., B-3061 Leefdaal (BE)
(74) Representative: Gille Hrabal
(86) International application number: PCT/BE2006/000031
(87) International publication number: WO 2006/105623

(56) References cited:
- WO-A-99/58597
- GB-A- 500 298
- DATABASE WPI Section Ch, Week 200054 Derwent Publications Ltd., London, GB; Class A14, AN 2000-574171 XP002309224 -& JP 2000 169756 A (ASAHI GOMU KK) 20 June 2000 (2000-06-20) cited in the application
- DATABASE WPI Section Ch, Week 199308 Derwent Publications Ltd., London, GB; Class A14, AN 1993-061759 XP002309225 & JP 05 009355 A (MITSUBISHI KASEI VINYL KK) 19 January 1993 (1993-01-19) cited in the application

## Description

This invention relates to a method for improving acoustic dampening properties of sheets, in particular for automotive application. The inventive process comprises the steps of applying, to the sheets, a substantially non-aqueous acoustic sealant composition consisting essentially of a polymeric component in combination with a.major level of a benzoate plasticizer and additives, including fillers, followed by heat treatment of the sheets to which the sealant composition has been applied.

Various technologies aiming at mitigating acoustic nuisances are known and have found established commercial application. The pertinent state of the art, and its shortcomings, is consequently well known. Japanese patent application JP 10237250 discloses coating compositions with good sound insulating properties containing vinyl chloride polymers in combination with a mixture of conventional plasticizers, namely diheptyl phthalate and diisononyl phthalate, fillers and additives. Japanese patent application JP 10237249 discloses comparable compositions having sound insulating properties containing vinyl chloride resins, phthalate plasticizers, fillers, liquid asphalt and adhesives. Japanese patent application JP 05279623 describes compositions for automotive application comprising elastomers embodying vinyl polymer and diolefin polymer blocks and hydrogenated indene resins. RO 100918 patent application pertains to anticorrosive and sound absorbing epoxy resin compositions prepared by mixing epoxy resin, butyl glycidyl and phenyl glycidyl ethers and dehydrated coal tar pitch. Japanese patent application JP 03144195 concerns compositions for vibration damping and sound attenuation containing a bituminous sheet and a thermosetting resin layer, optionally protected with an outer layer. The resin layer contains an epoxy resin and fillers. WO 99/58597 divulges water-based acoustic dampening compostions containing acrylic resin-based plastisol into which is incorporated a recycled paint polymer containing uncured resin and conventional plasticizers. DE 43 18 712 describes sprayable plastisol formulations exhibiting acoustic dampening properties. These formulations contain a major level of a crosslinkable, during application, mixture of a styrene polymer and a major level of a plasticizer together with fillers, reactive additives and other components in additicve levels which are used for their established functionality within the borders of plastisol technologies. The plasticizers are conventional. JP 2000-169756 pertains to known automotive coatings capable of providing a barrier against corrosion, mechanical damage and high frequency noise originating from factors different from the automotive body e.g. stone projections. The JP technology provides high frequency dampening contrary to the object of the inventive technology seeking enhanced low.frequency dampening over a broad range of temperatures, namely of from -20 to 50 °C. JP 05 9355 discloses a plastisol composition consisting of a vinyl chloride-type resin and a plasticizer containing a major amount of a benzoic acid ester of a C₂₋₁₅ alkylene glycol or a C₄₋₁₂ oxy-alkylene glycol. The composition can be used as a coating on cars to provide a barrier against chipping and mechanical damage originating from sources different from the automotive body. EP-A- 0 416 822 divulges stain-resistant plasticizer compositions containing mono- and di-esters of 2,2,4-trimethyl-1,3-pentanediol and benzoic acids possibly in combination with homopolymers or copolymers of vinyl chloride. These compostions can be used as floor coverings and wall coverings and were found to impart desirable stain resistance properties to the coverings. The esters can also be used as synthetic lubricants and as functional fluids such as automatic transmission fluids. EP-A-1 505 104 discloses foaming compositions containing at least one polymeric component, e.g. PVC, at least one primary plasticizer and a benzoic acid isononyl ester whereby the level of the plasticizer represents from 10 to 400 parts by weight per 100 parts by weight of the polymer. Di-benzoic acid esters can be used as primary plasticizers. The foaming composition of this reference can be used for the manufacture of floor coverings, synthetic leather and carpets.

The prior art is, as shown above, diverse and expresses a standing desire for optimizing, improving and mitigating acoustic inconveniences, for example in relation to automotive application.

It is a major object of this invention to provide means for improving acoustic properties of sheets.

It is another object of this invention to provide sound dampening benefits with the aid of plasticizer containing sealant compositions. Yet another object of this invention aims at providing means capable of delivering superior sound dampening versus sealant compositions based on conventional plasticizers. Yet a further object of this invention aims at dampening acoustic inconveniences of low frequencies, usually in the range of from 100 to 4000 Hz, at temperatures e.g. in the range of from -20 °C to 50 °C. Yet another object of the invention aims at mitigating the adsorption of low frequency noise originating from the automotive body. The above and other objects can now be met by means of the inventive technology described hereinafter.

The "percentage" or "%" indications used in the description stand, unless defined differently, for "percent by weight".

A method for improving acoustic properties of sheets has now been discovered comprising a series of essential steps. In detail the following essential method sequence is required in accordance with the invention herein:
(i) applying to the sheets an acoustic sealant composition consisting essentially of:
   (a) from 20 % to 80 % by weight of polyvinil chloride, optionally in mixture with acrylic polymers and/or cured epoxy resins
   (b) from about 5 % to 60 % by weight of a benzoate plasticizer; and
   (c) from 15 % to 65 % by weight of additives including fillers, organic diluents, pigments and adhesion promoters;
      whereby the water level in the sealant composition is less than 2 % by weight and the ponderal ratio of the polymeric component to the total plasticizer is from 1.2 to 4.0
(ii) followed by a heat treatment of the sheet to which the sealant composition has been applied at a temperature in the range of from 100 °C to 220 C for a period of from 1 minute to 2 hours; and
(iii) cooling, in a manner known per se, the sheets to ambient temperature.

The method of this invention requires applying to the sheets an acoustic sealant composition. The application of the like functional compositions to a surface is well known in the domain of the technology. As an- example of such application to sheets, e.g. vehicle metal surfaces, the sealant composition can be sprayed onto the surface. Preparatory to such spray on of the sealant, the surface can be treated by dip-phosphating and electrocoating. The sheets are subsequently submitted to a heat treatment at a temperature in the range of from 100 °C to 220 °C for a period of 1 minute to 2 hours, preferably at a temperature in the range of from 110 °C to 190 °C for a period of from 6 minutes to 90 minutes. As an actual example, the surface (sheet) to which the sealant has been applied can be moved through sequential temperature zones as follows: from 20 °C to 145 °C in 15 minutes, maintained at 145 °C during 5 minutes, heated from 145 °C to 160 °C in 15 minutes followed by a cooling zone from 160 °C to 125 °C in 15 minutes. The sheet is thereafter maintained at 125 °C during 10 minutes followed by cooling to ambient temperature. In practice, a car assembly (manufacturing) arrangement can be divided in 3 steps, namely: a first step called the "fabrication plant/body shop" where initial fabrication is completed; step 2 is known as the "paint shop"; whereas step 3 can be termed the trim shop. The sealant is usually applied to the surfaces and submitted to a temperature treatment in the paint shop.' After the dip-phosphating and the electrocoat of the surfaces, a sequence of operations can be in order e.g. as follows: sealing of joints; grinding and washing; primer; grinder and washing; followed by "basecoat" and "topcoat".

The sealant compositions to be applied to the sheets are non-aqueous containing a level of water in the sealant composition of less than 2 %, preferably less than 0. 5 %, most preferably less than 0.2 %.

The sealant compositions for use in the method of the invention contain as a first essential component a polyvinyl chloride wich is optionally in mixture with acrylic polymers and/or cured epoxy resins that is compatible with a plasticizer for application onto a surface. The polymers can be represented by homopolymers and copolymers. The acrylic polymer component can comprise homo- or copolymers derived from monomers comprising alkylmethacrylates and alkylacrylates. The alkyl moieties in both, the methacrylates and the acrylates, species can be represented by C₁-C₁₀ alkyl, more preferably C₁-C₄ alkyl radicals. The epoxy resins, which are cured during application, are based on: bisphenol A which has been reacted with epichlorhydrin; or an aliphatic polyglycol that has also been reacted with epichlorhydrin. The preferred aliphatic polyglycol can be represented by polypropylene glycol. Both epoxy resins can be reacted with curing agents such as primary and secondary amines, anhydrides, polyamides and catalytic curing agents such as tertiary amines, amine salts, boron trifluoride complexes and amine borates. The epoxy curing agents are added to the compositions and the curing (crosslinking) takes place during application, in the case of acoustic application frequently at temperatures equal to or greater than 100 °C. Latent catalysts, such as BF₃.MEA (borontrifluoride monoethylamine) complex or dicyandiamide can be used to obtain very long, up to several months, potlives. Dicyandiamide can be used as a suitable curing agent. Tertiary amines can -be used to accelerate the curing. The selection of epoxy resins and curing agents can be done routinely and the domain of such cured resins is eminently well known. The polymeric component represents broadly from 20 % to 80 %, more preferably from 30 % to 70 %, of the inventive compositions. In one preferred execution, the polymeric component can be represented by a mixture of, expressed on a 100 % basis, from 50-80 % of polyvinyl chloride and from 50-20 % of the acrylic polymer.

The benzoate plasticizer can be represented by known species. The benzoate plasticizer component is used in levels of from 5 % to 60 %, preferably of from 40 % to 15 % of the inventive compositions. Preferred benzoate plasticizers comprise mono- and di-benzoate species corresponding to the formula:

R₁C(O)OR₂

wherein R₁ represents a phenyl radical, R₂ represents-R₃O(O)CR₁ wherein R₃ is a divalent radical of the formula-R₄(OR₄)ₘ-, wherein R₄ is an alkyl radical containing from 2 to 4 carbon atoms and m represents 0 or the integer 1 or 2; or R₂ represents an alkyl radical containing from 3 to 21 carbon atoms. The individual benzoate plasticizer species e.g. can be used in any (ponderal) proportion. In one preferred execution a monobenzoate plasticizer is used in a ponderal proportion of up to 40 % based on the total weight (100 %) of the sum of the mono- and di-benzoate species.

Preferred benzoate plasticizers are dibenzoate esters, most preferably (propyleneglycol)₁₋₄ dibenzoates, (ethyleneglycol)₁₋₄ dibenzoates and dibenzoate esters of 2,2,4-trimethyl-1,3-pentane diol. The dibenzoate plasticizers can, in preferred embodiments, be used in mixture with a second (non-benzoate) plasticizer including benzylphthalates and conventional plasticizer species other than benzylphthalates. The ponderal proportions of the second plasticizer are, expressed in relation to the total level (benzoate + second plasticizer) of plasticizer (100 %), as follows:
- benzylphthalate: up to 50 %; and
- conventional plasticizer, other than benzylphthalates: up to 70 %, preferably up to 40 %; and
- monobenzoate plasticizers up to 40 %.

Preferred monobenzoate plasticizers can be represented by a monobenzoate ester of a C₃-C₂₁ alcohol and a monobenzoate ester of 2,2,4-trimethyl-1,3-pentanediol.

Benzylphthalate plasticizers are well known and have found widespread commercial application. Benzylphthalates are alkylbenzylphthalates wherein the alkyl chain, possibly branched and/or substituted, contains from 2 to 16 carbon atoms. Examples of other conventional plasticizers are dialkyl phthalates such as di(2-ethylhexyl) phthalate, diisononyl phthalate, di-isodecyl phthalate, diundecyl phthalate, dibutyl phthalate, dioctyl phthalate, C₃-C₂₄ esters of adipic, azelaic, sebacic, trimellitic, citric and phosphoric acid, alkyl esters of fatty acids, alkyl sulfonic acid esters of phenols and epoxidized triglycerides. A preferred conventional plasticizer, other than benzylphthalates, can be represented by (ethylene glycol) ₂₋₄-di(C₂-C₂₂ alcanoate), more preferably -di(C₄-C₁₆ alcanoate). The ponderal ratio of the polymer component to the total plasticizer component is in the range of from 1.2 to 4.0, preferably of from 1.2 to 2.5. In such ponderal ratios, the plasticizer is based on the total level of plasticizer i.e. the sum of the benzoate species and the second non-benzoate plasticizer

The compositions for use in the method herein further contain of from 15 % to 65 % of additives, including fillers, organic diluents including solvents and rheology adjusters, pigments and adhesion promoters. The filler component as such represents generally of from 7 % to 62 %, more preferably of from 10 % to 60 % of the compositions. The filler serves to, among others, increase the density of the coating and also to enhance the dampening efficacy. The filler can be represented by chemically inert materials. While usually inorganic fillers are exemplified, it goes without saying that various other e.g. compatible polymeric fillers can be used. The sum of the non-filler additives is preferably used in levels ranging from 2 % to 15 % of the composition. The non-filler additives generally are used for their art established functionalities in application conventional levels. Examples of non-filler additives are organic diluents, including solvents, and rheology adjusters. The organic diluents can be represented by C₈-C₂₂ alcanes, C₈-C₂₂ iso-and normal paraffins, alkylbenzenes having from 3 to 21 carbon atoms in the alkyl chain and alpha-olefins with 4 to 21 carbon atoms and naphthenic solvents. Suitable fillers can be represented by calcium carbonate, magnesium carbonate and metal oxides such as zinc oxide, calcium oxide, silica and mixtures thereof are frequently used in levels ranging from 10 % to 60 %. Adhesion promoters and pigments can be used usually in amounts of from 0.1 to 5 %, preferably of from 0.3 to 0.5 % for each of such individual additives. Preferred adhesion promoters can be polyamidoamines.

The acoustic dampening benefits of the method of this invention can be measured with the Oberst bar as, for instance, described in the Renault method D45 1809/. This method is used to study the dampening properties of coated metal bars. The coating consists of a sealant formulation. For comparative testing purposes, sheets to which the sealant have been applied, having a thickness of 2 mm, are heated to 160 °C, maintained at that temperature during 45 minutes and cooled to ambient temperature. The testing measurements on such sheets are in good correlation with DMTA measurements.

It is known that there is a good correlation between the Oberst bar and a DMTA (Dynamic Mechanical Thermal Analysis) testing. In this latter method, the fused plastisol formulation or the cured epoxy resin formulation is studied without the metal bar. The change in internal molecular mobility is actually measured. The results are expressed in "tangens delta" values that define the acoustic dampening. Maximum dampening occurs at the glass transition temperature (Tg).

Sealants suitable for use in the claimed method and prior art sealants were evaluated by means of the DMTA method. The sealants were fused in a mold at 160 °C for 45 minutes to thereby yield samples having a thickness of 2 mm (millimeters). The DMTA test was run under the following conditions: dynamic temperature sweeps between -100 °C and +150 °C with a heating rate of 4 °C/minute at a constant frequency of 5 Hz (31.4 rad/sec). The components in the compositions tested were, in parts by weight, as follows.

| Example | 1 (c) | 2 |
|---|---|---|
| Polyvinylchloride (emulsion grade) | 70 | 70 |
| Polyvinylchloride (extender grade) | 30 | 30 |
| Diisononylphthalate | 50 | - |
| Dipropyleneglycol dibenzoate | - | 50 |
| Dearomatized hydrocarbon fluid | 10 | 10 |
| Calcium carbonate | 30 | 30 |
| -Calcium oxide | 4 | 4 |

| | | |
|---|---|---|
| (c) = comparative. | | |

The testing data, measuring the tangens delta values, were as follows:

| Example | Tangens delta at °C | | | | |
|---|---|---|---|---|---|
| | 0 | 10 | 20 | 30 | 40 |
| 1 | 0.3 | 0.33 | 0.38 | 0.4 | 0.3 |
| 2 | 0.3 | 0.65 | 0.85 | 0.8 | 0.35 |

The results show that the tangens delta, a measure of the dampening properties, is unexpectedly and significantly superior for the dibenzoate execution of the inventive method as compared to the art.

Acoustic polyalkylmethacrylate plastisol sealants having the listed compositions, in parts by weight, were tested as described for Example 1. not according to the invention

| Example | 3* | 4* (c) |
|---|---|---|
| Polymethylmethacrylate (emulsion resin) (i) | 70 | 70 |
| Polymethylmethacrylate (extender bead) (ii) | 30 | 30 |
| Dipropylene glycol dibenzoate | 100 | - |
| Diisoheptyl phthalate | - | 100 |
| Dearomatized hydrocarbon fluid | 10 | 10 |
| Calcium carbonate | 30 | 30 |
| Calcium oxide | 4 | 4 |

| | | |
|---|---|---|
| (i): DEGALAN ™BM 310, Rohm GmbH & Co. Germany (ii): DEGALAN ™ 8744, Rohm GmbH & Co. Germany * not according to the invention | | |

The DMTA testing results were as follows:

| Example | Tangens delta at °C | | | | | |
|---|---|---|---|---|---|---|
| | 0 | 10 | 20 | 40 | 60 | 80 |
| 3* | 0.6 | 0.95 | 1.4 | 0.65 | 0.2 | 0 |
| 4* | 0.18 | 0.2 | 0.22 | 0.38 | 1.1 | 0.25 |

| | | | | | | |
|---|---|---|---|---|---|---|
| * not according to the invention | | | | | | |

The results show that the sound dampening properties of the dibenzoate method of this invention were significantly superior, in particular within conventional automotive usage temperature ranges, as compared to a phthalate plasticizer. In addition, conventional phthalate plasticizers are subject to exudation which can move the maximum tangens delta values, or effective sound dampening, out of the temperature range of the contemplated application.

Another series of comparative tests were run thereby using the recited formulations (components expressed in parts by weight) to illustrate the benefits attached to the claimed technology. The data were generated as described in Example 1.

| Example | 5 (c) | 6 (c) | 7 | 8 |
|---|---|---|---|---|
| Polymethylmethacrylate (emulsion resin) (i) | 35 | 35 | 35 | 35 |
| Polymethylmethacrylate (extender bead) (ii) | 15 | 15 | 15 | 15 |
| Polyvinylchloride (emulsion grade) | 35 | 35 | 35 | 35 |
| Polyvinylchloride (extender grade) | 15 | 15 | 15 | 15 |
| Diisodecylphthalate | 75 | - | - | - |
| Isononylbenzylphthalate | - | 75 | - | - |
| Diethyleneglycol dibenzoate | - | - | 75 | - |
| Dipropyleneglycol dibenzoate | - | - | - | 75 |
| Dearomatized hydrocarbon fluid | 10 | 10 | 10 | 10 |
| Calcium carbonate | 30 | 30 | 30 | 30 |
| Calcium oxide | 4 | 4 | 4 | 4 |

The testing data, expressed in tangens delta, were as follows:

| Example | Tangens delta at °C | | | | | | |
|---|---|---|---|---|---|---|---|
| | 0 | 10 | 20 | 30 | 40 | 50 | 70 |
| 5 | 0.25 | 0.25 | 0.25 | 0.25 | 0.25 | 0.25 | 0.2 |
| 6 | 0.3 | 0.3 | 0.35 | 0.35 | 0.4 | 0.5 | 0.3 |
| 7 | 0.4 | 0.7 | 1.0 | 0.95 | 0.6 | 0.3 | 0.2 |
| 8 | 0.4 | 0.7 | 1.1 | 1.0 | 0.7 | 0.35 | 0.2 |

The results confirm the significantly superior dampening properties of the inventive method as compared to state-of-the-art technology. It is particularly noteworthy that the inventive technology produce benefits over a broad range of usage temperatures.

Acoustic sealants based on epoxy resins, having the listed compositions expressed in parts by weight, were performance tested, in the method of this invention, as described in Example 1.

| Example | 9* | 10* (c) |
|---|---|---|
| Bisphenol A liquid epoxy resin | 40 | 40 |
| Propyleneglycol liquid epoxy resin | 60 | 60 |
| Dicyandiamide curing agent | 10 | 10 |
| Tertiary amine accelerator | 5 | 5 |
| Calcium oxide | 15 | 15 |
| Calcium carbonate | 200 | 200 |
| Dipropyleneglycol dibenzoate | 30 | |
| Diisononylphthalate | - | 30 |

| | | |
|---|---|---|
| * not according to the invention | | |

The DMTA testing results were as follows:

| Example | Tangens delta at °C | | | | | |
|---|---|---|---|---|---|---|
| | -10 | 0 | 10 | 20 | 30 | 70 |
| 9* | 0.2 | 0.42 | 0.55 | 0.57 | 0.38 | 0.26 |
| 10* | 0.2 | 0.26 | 0.33 | 0.38 | 0.38 | 0.26 |

| | | | | | | |
|---|---|---|---|---|---|---|
| * not according to the invention | | | | | | |

The testing data confirm the beneficial dampening superiority of the claimed arrangement, particularly with respect to conditions prevailing in moderate climates.

The beneficial acoustic use of dibenzoate plasticizers or mixed dibenzoate/monobenzoate plasticizers in the claimed method is further illustrated with the aid of specific executions as follows. These compositions, expressed in parts by weight, were performance tested as described in Example 1.

| Example | 11 | 12 | 13 |
|---|---|---|---|
| Polyvinyl chloride (emulsion grade) | 70 | 70 | 70 |
| Polyvinyl chloride (extender grade) | 30 | 30 | 30 |
| Dipropylene glycol dibenzoate | 50 | 50 | 50 |
| Dearomatized hydrocarbon fluid | 10 | - | - |
| 2-Ethylhexyl benzoate | - | 15 | - |
| Benzoate ester of 2,2,4 trimethylpentane diol isobutyrate | - | - | 15 |
| Calcium carbonate | 30 | 30 | 30 |
| Calcium oxide | 4 | 4 | 4 |

The DMTA data were as follows.

| Example | Tangens delta at °C. | | | | | |
|---|---|---|---|---|---|---|
| | -10 | 0 | +10 | +20 | +30 | +40 |
| 11 | 0.2 | 0.3 | 0.44 | 0.52 | 0.54 | 0.38 |
| 12 | 0.3 | 0.48 | 0.72 | 0.68 | 0.40 | 0.36 |
| 13 | 0.2 | 0.35 | 0.60 | 0.68 | 0.48 | 0.42 |

The data evidence the acoustic benefits attached to the use of the claimed method.

To provide further showings of the beneficial sound dampening properties of the inventive technology, Example 7 of JP-A-2000-169756 was evaluated and compared to Examples 1(c) and 2 described in this patent document.

The composition in accordance with the Japanese patent contained the listed ingredients, expressed in parts by weight, as follows.

| | |
|---|---|
| PVC Emulsion grade | 70 |
| PVC Extender | 30 |
| Calcium carbonate | 150 |
| Calcium oxide | 30 |
| Dipropyleneglycol dibenzoate | 150 |
| Tricresyl phosphate | 150 |
| Diluent (Exxsol D100) | 30 |
| Various (TiO₂; foamer; amine; etc.) | 24.5 |
| Total | 634.5 |

Ingredients in the comparative compositions vary, expressed in % by weight, as follows:

| Ingredient | Japanese | Example 1 | Example 2 |
|---|---|---|---|
| PVC | 15.8 | 54 | 54 |
| Plasticizer | 47.3 | 27 | - |
| Filler | 32 | 18.5 | 18.5 |
| Di-benzoate | 23.5 | - | 27 |

The comparative testing data, measuring the tangens delta values, were as follows.

| Temperature °C | Japanese | Example 1 | Example 2 |
|---|---|---|---|
| -50 | 0.2 | 0 | 0 |
| -40 | 0.8 | 0 | 0 |
| -30 | 1.4 | 0 | 0 |
| -20 | 0.7 | 0 | 0 |
| -10 | 0.2 | 0 | 0 |
| 0 | 0 | 0.3 | 0.3 |
| 10 | 0 | 0.33 | 0.65 |
| 20 | 0 | 0.38 | 0.85 |
| 30 | 0 | 0.4 | 0.8 |
| 40 | 0 | 0.3 | 0.35 |

These data show that the Japanese technology does not suppress acoustic inconveniences at low frequencies, preferably in the range of from 20 to 500 Hz, more preferably 150 to 250 Hz, at ambient temperature contrary to the inventive technology.

## Claims

1. . A method for improving acoustic dampening properties of sheets, particularly suitable for automotive application, comprising the steps of:
(I) applying to the sheets an acoustic sealant composition consisting essentially of:
(a) from 20 % to 80 % by weight of polyvinyl chloride optionally in mixture with acrylic polymers and/or cured epoxy resins;
(b) from 5 % to 60 % by weight of a benzoate plasticizer; and
(c) from 15 % to 65 % by weight of additives including fillers, organic diluents, pigments and adhesion promoters;
whereby the water level in the sealant composition is less than 2 % by weight and the ponderal ratio of the polymeric component to the total plasticizer is from 1.2 to 4.0;
(II) followed by a heat treatment of the sheet to which the sealant composition has been applled at a temperature in the range of from 100 °C to 220 °C for a period of from 1 minute to 2 hours; and
(III) cooling, In a manner known per se, the sheets to ambient temperature.

2. . The method in accordance with Claim 1 wherein the polyvinyl chloride which is optionally in mixture with acrylic polymers and/or cured epoxy resins represents from 30 % to 70 % by weight and the benzoate plasticizer represents from 40 % to 15 % by weight.

3. . The method in accordance with Claims 1 and 2 wherein the acrylic polymer Is selected from homopolymers or copolymers of alkylmethacrylates and alkylacrylates wherein the alkyl radicals in the methacrylates and in the acrylates are represented by C₁-C₁₀, preferably C₁-C₄ carbon chains.

4. . The method in accordance with Claim 1 wherein the benzoate plasticizer is represented by a dibenzoate selected from the group of (propyleneglycol)ₓ-dibenzoate, (ethyleneglycol)ₓ-dibenzoate, wherein x is an integer of from 1 to 4, dibenzoate ester of 2, 2, 4-trimethyl-1,3-pentane diol and mixtures thereof.

5. . The method in accordance with Claim 1 whereby the heat treatment is applied at a temperature in the range of from 110 °C to 190 °C for a period of 6 minutes to 90 minutes.

6. . The method in accordance with Claims 1 and 4 wherein the benzoate plasticizer is used in combination with up to 50 % by weight, expressed In relation to the total level of plasticizer (100 %), of a benzylphthalate plasticizer.

7. . The method in accordance with Claims 1 and 4 wherein the benzoate plasticizer is used In combination with up to 70 % by weight, expressed in relation to the total level of plasticizer (100 %), of a conventional plasticizer other than a benzylphthalate plasticizer.

8. . The method in accordance with Claims 1 and 4 wherein the dibenzoate plasticizer is used in combination of up to 40 % by weight, expressed In relation to the total level of plasticizer (100 %), of a monobenzoate ester of a C₃-C₂₁ alcohol or of a 2,2,4-trimethyl-1,3-pentane diol,

9. . The method in accordance with Claims 1 and 4 wherein the benzoate plasticizer is used in combination with up to 40 % by weight, expressed in relation to the total level of plasticizer (100 %), of (ethyleneglycol)₂₋₄-di(C₂-C₂₂-alcanoate).

10. . The method in accordance with Claim 1 containing from 2 % to 15 % by weight of additives other than fillers, in particular organic diluents selected from the group of C₈-C₂₂ alcanes, C₆-C₂₂ iso-and normal-poraffins, naphthenic solvents and alkylbenzenes having from 3 to 21 carbon atoms in the alkyl chain and alpha-olefins with 4 to 21 carbon atoms and from 7 % to 62 % by weight of a filler selected from the group of calcium carbonate, magnesium carbonate and metal oxides such as silica, zinc oxide, calcium oxide and mixtures thereof.

11. . The method in accordance with Claims 1 and 9 wherein the polyvinyl chloride Is mixed with the acrylic polymer to a mixture containing from 50-80 % by weight of polyvinyl chloride, expressed on a 100 % basis, and from 50-20 % by weight of the acrylic polymer,

12. . The method in accordance with Claims 1 wherein the ponderal ratio of the polyvinyl chloride which is optionally in mixture with acrylic polymers and/or cured epoxy resins to the total plasticizer Is in the range of from 1.2 to 2.5.

## Patentansprüche

1. Eine Methode zur Verbesserung der akustischen Dämpfungseigenschaften von Platten, besonders geeignet zur Anwendung im Automobilbereich, die die Schritte umfasst:
(I) Auftragen einer akustischen Dichtungsmittelzusammensetzung auf die Platten, die im Wesentlichen besteht aus:
(a) 20 bis 80 Gewichts-% Polyvinylchlorid, wahlweise in einem Gemisch mit Acrylpolymeren und/oder gehärteten Epoxidharzen;
(b) 5 bis 60 Gewichts-% eines Benzoat-Weichmachers; und
(c) 15 bis 65 Gewichts-% Zusatzstoffen, die Füller, organische Verdünner, Pigmente und Haftvermittler beinhalten;
wobei der Wasser-Gehalt in der Dichtungsmittelzusammensetzung weniger als 2 Gewichts-% beträgt, und das Gewichts-Verhältnis der polymeren Komponente zur Gesamtmenge von Weichmacher 1,2 bis 4,0 beträgt;
(II) gefolgt von einer Hitzebehandlung der Platte, auf die die Dichtungsmittelzusammensetzung aufgetragen wurde, bei einer Temperatur in dem Bereich von 100 °C bis 220 °C für eine Dauer von 1 Minute bis 2 Stunden; und
(III) Abkühlen der Platten auf Umgebungstemperatur auf eine an sich bekannte Art und Weise.

2. Methode in Übereinstimmung mit Anspruch 1, wobei das Polyvinylchlorid, das wahlweise in einem Gemisch mit Acrylpolymeren und/oder gehärteten Epoxidharzen vorliegt, 30 bis 70 Gewichts-% darstellt, und der Benzoat-Weichmacher 40 bis 15 Gewichts-% darstellt.

3. Methode in Übereinstimmung mit den Ansprüchen 1 und 2, wobei das Acrylpolymer ausgewählt ist aus Homopolymeren oder Copolymeren von Alkylmethacrylaten und Alkylacrylaten, wobei die Alkylradikale in den Methacrylaten und in den Acrylaten durch C₁-C₁₀-, vorzugsweise C₁-C₄-Kohlenstoffketten vertreten werden.

4. Methode in Übereinstimmung mit Anspruch 1, wobei der Benzoat-Weichmacher vertreten wird durch einen Dibenzoesäureester ausgewählt aus der Gruppe von (Propylenglycol)ₓ-Dibenzoat, (Ethylenglycol)ₓ-Dibenzoat, wobei x eine ganze Zahl von 1 bis 4 ist, Dibenzoesäureester von 2,2,4-Trimethyl-1,3-pentandiol, und Gemische derselben.

5. Methode in Übereinstimmung mit Anspruch 1, wobei die Hitzebehandlung bei einer Temperatur von 110 °C bis 190 °C für eine Dauer von 6 Minuten bis 90 Minuten angewandt wird.

6. Methode in Übereinstimmung mit Anspruch 1 und 4, wobei der Benzoat-Weichmacher in Kombination mit bis zu 50 Gewichts-%, ausgedrückt im Verhältnis zur Gesamtmenge des Weichmachers (100%), eines Benzylphthalat-Weichmachers verwendet wird.

7. Methode in Übereinstimmung mit den Ansprüchen 1 und 4, wobei der Benzoat-Weichmacher in Kombination mit bis zu 70 Gewichts-%, ausgedrückt im Verhältnis zur Gesamtmenge des Weichmachers (100%), eines herkömmlichen Weichmachers, bei dem es sich nicht um einen Benzylphthalatweichmacher handelt, verwendet wird.

8. Methode in Übereinstimmung mit den Ansprüchen 1 und 4, wobei der Dibenzoat-Weichmacher in Kombination mit bis zu 40 Gewichts-%, ausgedrückt im Verhältnis zur Gesamtmenge des Weichmachers (100%), eines Monobenzoesäureesters eines C₃-C₂₁-Alkohols oder eines 2,2,4-Trimethyl-1,3-pentandiols, verwendet wird.

9. Methode in Übereinstimmung mit den Ansprüchen 1 und 4, wobei der Benzoat-Weichmacher in Kombination mit bis zu 40 Gewichts-%, ausgedrückt im Verhältnis zur Gesamtmenge des Weichmachers (100%), eines (Ethylenglycol)₂₋₄-di(C₂-C₂₂-Alkanoats) verwendet wird.

10. Methode in Übereinstimmung mit Anspruch 1, enthaltend 2 bis 15 Gewichts-% von Zusatzstoffen, bei denen es sich nicht um Füller handelt, insbesondere organische Verdünner ausgewählt aus der Gruppe der C₈-C₂₂-Alkane, C₈-C₂₂-iso- und normal-Paraffine, naphthenischer Lösungsmittel und Alkylbenzole mit 4 bis 21 Kohlenstoffatomen, und 7 bis 62 Gewichts-% eines Füllers ausgewählt aus der Gruppe von Calciumcarbonat, Magnesiumcarbonat und Metalloxiden wie Silika, Zinkoxid, Calciumoxid und Gemischen derselben.

11. Methode in Übereinstimmung mit den Ansprüchen 1 und 9, wobei das Polyvinylchlorid mit einem Acrylpolymer zu einem Gemisch vermischt wird, das 50-80 Gewichts-% Polyvinylchlorid, ausgedrückt auf einer Basis von 100 %, und 50-20 Gewichts-% des Acrylpolymers enthält.

12. Methode in Übereinstimmung mit Anspruch 1, wobei das Gewichts-Verhältnis des Polyvinylchlorids, welches wahlweise in einem Gemisch mit Acrylpoylmeren und/oder Epoxidharzen vorliegt, zur Gesamtmenge des Weichmachers im Bereich von 1,2 bis 2,5 liegt.

## Revendications

1. Procédé pour améliorer des propriétés d'amortissement acoustique de feuilles, particulièrement approprié pour une application automobile, comprenant les étapes qui consistent :
(i) à appliquer sur les feuilles une composition de matériau d'étanchéité acoustique constituée essentiellement :
(a) de 20% à 80% en poids de chlorure de polyvinyle facultativement en mélange avec des polymères acryliques et/ou des résines époxy durcies ;
(b) de 5% à 60% en poids d'un plastifiant à base de benzoate ; et
(c) de 15% à 65% en poids d'additifs incluant des charges, des diluants organiques, des pigments et des promoteurs d'adhérence ;
moyennant quoi le niveau d'eau dans la composition de matériau d'étanchéité est inférieur à 2% en poids et le rapport pondéral du composant polymère sur le plastifiant total est compris entre 1,2 et 4,0 ;
(ii) suivie d'un traitement thermique de la feuille à laquelle la composition de matériau d'étanchéité a été appliquée à une température se trouvant dans la plage allant de 100°C à 220°C pendant une période allant de 1 minute à 2 heures ; et
(iii) à refroidir, d'une manière connue en soi, les feuilles à température ambiante.

2. Procédé selon la revendication 1, dans lequel le chlorure de polyvinyle qui est facultativement en mélange avec des polymères acryliques et/ou des résines époxy durcies représente 30% à 70% en poids et le plastifiant à base de benzoate représente 40% à 15% en poids.

3. Procédé selon les revendications 1 et 2, dans lequel le polymère acrylique est choisi parmi des homopolymères ou des copolymères de méthacrylates d'alkyle et d'acrylates d'alkyle où les radicaux alkyle dans les méthacrylates et dans les acrylates sont représentés par des chaînes carbonées en C₁ à C₁₀, de préférence en C₁ à C₄.

4. Procédé selon la revendication 1, dans lequel le plastifiant à base de benzoate est représenté par un dibenzoate choisi dans le groupe constitué de dibenzoate de (propylène glycol)ₓ, de dibenzoate d'(éthylèneglycol)ₓ, où x est un nombre entier allant de 1 à 4, d'ester de dibenzoate de 2,2,4-triméthyl-1,3-pentanediol et de mélanges de ceux-ci.

5. Procédé selon la revendication 1, dans lequel le traitement thermique est appliqué à une température se trouvant dans la plage allant de 110°C à 190°C pendant une période allant de 6 minutes à 90 minutes.

6. Procédé selon les revendications 1 et 4, dans lequel le plastifiant à base de benzoate est utilisé en combinaison avec une quantité allant jusqu'à 50% en poids, exprimée par rapport au niveau total du plastifiant (100%), d'un plastifiant à base de benzylphtalate.

7. Procédé selon les revendications 1 et 4, dans lequel le plastifiant à base de benzoate est utilisé en combinaison avec une quantité allant jusqu'à 70% en poids, exprimée par rapport au niveau total du plastifiant (100%), d'un plastifiant classique autre qu'un plastifiant à base de benzylphtalate.

8. Procédé selon les revendications 1 et 4, dans lequel le plastifiant à base de dibenzoate est utilisé en combinaison avec une quantité allant jusqu'à 40% en poids, exprimée par rapport au niveau total du plastifiant (100%), d'un ester de monobenzoate d'un alcool en C₃ à C₂₁, ou d'un 2,2,4-triméthyl-1,3-pentanediol.

9. Procédé selon les revendications 1 et 4, dans lequel le plastifiant à base de benzoate est utilisé en combinaison avec une quantité allant jusqu'à 40% en poids, exprimée par rapport au niveau total du plastifiant (100%), de (éthylène glycol)₂₋₄-di(alcanoate en C₂ à C₂₂).

10. Procédé selon la revendication 1 contenant 2% à 15% en poids d'additifs autres que des charges, en particulier des diluants organiques choisis dans le groupe d'alcanes en C₈ à C₂₂, d'iso-paraffines et de paraffines normales en C₈ à C₂₂, de solvants naphténiques et d'alkylbenzènes ayant 3 à 21 atomes de carbone dans la chaîne alkyle et d'alpha-oléfines ayant 4 à 21 atomes de carbone et 7% à 62% en poids d'une charge choisie dans le groupe constitué de carbonate de calcium, de carbonate de magnésium et d'oxydes métalliques tels que la silice, l'oxyde de zinc, l'oxyde de calcium et des mélanges de ceux-ci.

11. Procédé selon les revendications 1 et 9, dans lequel le chlorure de polyvinyle est mélangé avec le polymère acrylique à un mélange contenant 50 à 80% en poids de chlorure de polyvinyle, exprimé sur une base de 100%, et 50 à 20% en poids du polymère acrylique.

12. Procédé selon la revendication 1, dans lequel le rapport pondéral du chlorure de polyvinyle qui est facultativement en mélange avec des polymères acryliques et/ou des résines époxy durcies sur le plastifiant total se trouve dans la plage allant de 1,2 à 2,5.
